# EUROPEAN PATENT APPLICATION

(11) **EP 2 138 967 A2**
(43) Date of publication of application: **30.12.2009**
(21) Application number: 09157893.0
(22) Date of filing: 14.04.2009
(51) Int. Cl.: G06Q 30/00

(54) **System and method for inserting advertisements from multiple ad servers via a master component**

(30) Priority: 11.04.2008 US 123945 P
(71) Applicant: Tremor Media Inc., New York NY 10001 (US)
(72) Inventor: Parra, Charles, New York, NY 10010 (US); Chenard, Jesse Ray, New York, NY 10001 (US)
(74) Representative: McCrann, Sarah Ann

(57) **Abstract**

A system and method for rendering content may include an ad insertion system and/or content provider that, responsive to a request for media content from a terminal, provides to the terminal the media content, a program module, and ad insertion instructions, the ad insertion instructions including at least one link to a respective ad content providing entity. The terminal may render the media content via a media content player running on the terminal. For each of a plurality of ad insertion points during the rendering of the media content, the terminal may execute the program module to access a link of the at least one link, and, responsive to receipt of response data that is returned in response to the link access, load a content fetching program referenced by the response data, the loaded content fetching program subsequently obtaining ad content for rendering at the terminal.

## Description

### Cross-Reference to Related Applications

This application claims priority to U.S. Provisional Patent Application No. 61/123,945, filed April 11, 2008, entitled "System and Method for Providing Advertisements From Multiple Ad Servers for Insertion During Content Playback," which is herein incorporated by reference in its entirety.

### Background

Content players, such as web-browser-invoked players of Internet provided video streams, often display advertisements. A non-exhaustive list of exemplary advertisements which may be displayed include an ad video stream, an ad banner, and/or an overlay.

When initially obtaining the content player for rendering of the user-requested content, an ad content provider entity, e.g., a server of an ad publisher, provides a player. Ad publishers often manage numerous ad campaigns of multiple entities, hereinafter referred to as campaign entities. The content player provided by the ad publisher server is integrated with a program component for obtaining the advertisements from one of the campaign entities. The multiple campaign entities, in turn, maintain ad servers which include the ad content (and/or are themselves ad publishers, just as the initially discussed ad publisher may itself be a campaign entity managed by another ad publisher). References made below to an ad publisher are to the ad publisher or to a server maintained by the ad publisher. Similarly, reference made below to a campaign entity are to the campaign entity or to a server maintained by the campaign entity. When an ad publisher receives a request for a content player, the ad publisher returns one integrated with a link, e.g., a Uniform Resource Locator (URL), of an ad server of one of the campaign entities, usually in accordance with a business logic. For example, an ad publisher might predict that it will receive 10 million ad requests for which to provide an ad impression, i.e., a rendering of ad content, in a certain time period. The ad publisher might have entered into an agreement with a first campaign entity to provide impressions of its advertisements 4 million times and with a second campaign entity to provide impressions of its advertisements 2 million times in the same time period. The ad publisher may therefore follow a business logic which weights the ads of the first campaign entity more than those of the second campaign entity so that the links to ads of the first campaign entity are provided at a higher ratio than those of the second campaign entity.

The program component, hereinafter referred to as a third party component, manages the provision or even the display of the ad content. The third party component thereafter provides ad content to the content player with which it is integrated for rendering, e.g., displaying, an advertisement. Different third party components are provided for different campaign entities, e.g., their maintained servers. Therefore, content players must always be updated to be compatible with each new third party component that is produced and must be separately provided to a requesting user terminal for each different third party component that is to be used.

The content player, e.g., after play of a first ad obtained via the third party ad component, directs advertisement requests, or otherwise provides control, to the third party component, which handles the further requests as it handled obtaining the initial ad. For handling the further requests, the third party component obtains further ad content from an ad server of the campaign entity to which the third party component is proprietary. Therefore, once the ad publisher provides a way to obtain ads for a play of user-requested content, the ad publisher loses control of providing further ads. The ad publisher is therefore unable to continue rotating through multiple ad campaigns after providing the initial ad link.

Furthermore, while the ad publisher may log the provision of the initial ad, the ad publisher has no way of tracking the advertisements provided subsequent to the initial ad, since the provision of the subsequent ads is handled exclusively by the third party component. Therefore, the ad publisher cannot accurately ascertain the number of ad impressions a campaign entity has received.

In addition, where playing of the ad content is handled by the integrated player of the third party component, the ad publisher has no way of tracking whether an ad was ultimately provided by the campaign entity for which the ad publisher provided the player having the third party component via which to obtain the ads or whether and/or how a viewer interacted with the provided ad, information which can play a prominent role in executing business logic for determining which ads to provide in the future to the same or a different user. For example, the ad publisher has no way of tracking whether a viewer clicked on an ad or how much of an ad the viewer viewed.

Furthermore, presently, where a URL or other link is used to request data from an entity, systems provide for inclusion, in the request, of keywords used by a user in a web browser in response to which the user ultimately obtained the page including the link to the entity. However, conventional systems do not provide any way of providing to an ad providing entity information regarding the nature of or user-interaction with a video for which the advertisements are to be provided, which information can be useful as targeting information to determine the type and/or content of advertisements to provide in response to a request for advertisements.

Often, in response to an ad request from a content player received by an ad publisher or by a downstream campaign entity, the receiving entity does not provide data which can be parsed by the content player for rendering ad content. For example, an ad publisher may provide a URL to a downstream campaign entity, e.g., for rendering of content of which a proprietary third party component is not required, which, in turn, acting in the capacity of an ad publisher, may provide ads on behalf of further downstream entities with which the campaign entity has contracted. However, it may occur, for example, that the contracts with the further downstream entities specify a predetermined number of ads to provide over a predetermined time period. Once the specified number of ads have been provided by the campaign entity for all of its downstream entities, the campaign entity may refrain from providing any further ad content until after the predetermined time period. It may therefore occur that the content player does not display any ad during an ad insertion slot.

### Summary

Embodiments of the present invention provide a system and method that address each of the deficiencies described above with respect to conventional ad insertion systems. A central ad insertion system (AIS) may be accessed by a user to obtain content. In response, the AIS may provide to a player at the user site program rules for playing the requested content and for inserting advertisements between or during play of content segments. The program rules may include a master component for executing the program rules. The program rules may specify an address, e.g., a URL, of an ad publisher from which to obtain an ad when the content player reaches an ad insertion point during the playing of the user-requested content. The master component may transmit an ad request to the specified address.

If ad content, e.g., an address of an ad server which includes the ad content, is received by the master component from the accessed ad publisher or from a further downstream entity, the master component may provide the ad content to the content player for display or may itself handle the display of the ad content. However, instead of ad content, a third party component, or a trigger of a particular third party component for which the master component is configured, may be provided to the master component from the further downstream entity in response to the ad request. In this regard, the master component may be configured with the locations and other necessary parameters for obtaining and correctly loading multiple third party components, one of which may be specified in the response to the ad request. The master component may load and invoke the third party component and pass content obtained by the third party component to the content player, render the ad content and subsequently return control to the content player, or otherwise, where the third party component is integrated with its own sub-player to handle display of the ad content, return control to the content player after the third party component completes display of the ad content. Because of the direct communication between the content player and the master component, instead of between the content player and the third party component, at a subsequent ad insertion point, the content player may request a further ad content from the master component, which may transmit a request to the ad publisher (or a different ad publisher). The ad publisher, in turn, may return a link to the same or a different downstream entity. The ad publisher may record each ad request made during playing of the user-requested content by the content player.

The master component may track the rendering of the ad content and the user interaction with the rendered ad content and may forward the tracking information to the ad publisher and/or further downstream entities that directly or indirectly provided the link to the ad content. Even where display of the ad content is handled by the third party component, the master component may track user interaction with the ad content since the invocation hierarchy with respect to the master component and third party component may result in the user input, e.g., an ad click, initially being passed to the master component which may forward the input on to the third party component. Further, the master component may track whether ad content has been obtained by the third party component and the extent to which it has played by utilizing Application Program Interface (API) hooks into the third party component. The tracking information may be provided to the ad publisher or further downstream entity by accessing tracking addresses, e.g., tracking URLs provided by the ad publisher or further downstream entity. Furthermore, where one entity, e.g., the ad publisher, provides a URL to a downstream entity, which may itself provide a URL to an even further downstream entity etc. for a rendering of ad content provided at the lowest reached hierarchical level, the entity at each level of the hierarchy may provide its own tracking URLs which may be accessed by the master component to provide each of the entities with its respective requested tracking information.

The program rules and/or any of the ad request responses received from an ad publisher or further downstream entity may include a primary ad URL and one or more failover URLs. If the master component, upon accessing the primary URL, receives a response which the master component cannot successfully interpret for ultimately rendering ad content, the master component may access the failover URL. In an example embodiment of the present invention, at any hierarchical level, a single primary and a single failover URL may be provided. The failover URL may be a link to the entity which has provided the primary and secondary URLs. Upon being accessed via the failover URL, the entity may return another set of primary and failover URLs, e.g., where the primary URL is to a different entity than that to which the previous primary URL directed the master component. According to this embodiment, entities may determine in real time the new URLs to provide in the event of a failure. It is noted that these failover mechanisms may be implemented in combination with or independent of the features described above for providing rotation and/or tracking of ad content from multiple ad content providers implementing third party components.

### Brief Description of the Drawings

Figure 1 is a block diagram that illustrates components of a system according to an example embodiment of the present invention.

Figure 2 is a flowchart that illustrates a method of providing ad content during rendering of user-requested content via a plurality of third party components, according to an example embodiment of the present invention.

Figure 3 is a flowchart that illustrates a method of obtaining ad content in the event of a failure of a URL linking to an ad content provider entity, according to an example embodiment of the present invention.

Figure 4 is a diagram illustrating a schema of a wrapper which may be provided in response to a request for ad content, according to an example embodiment of the present invention.

### Detailed Description

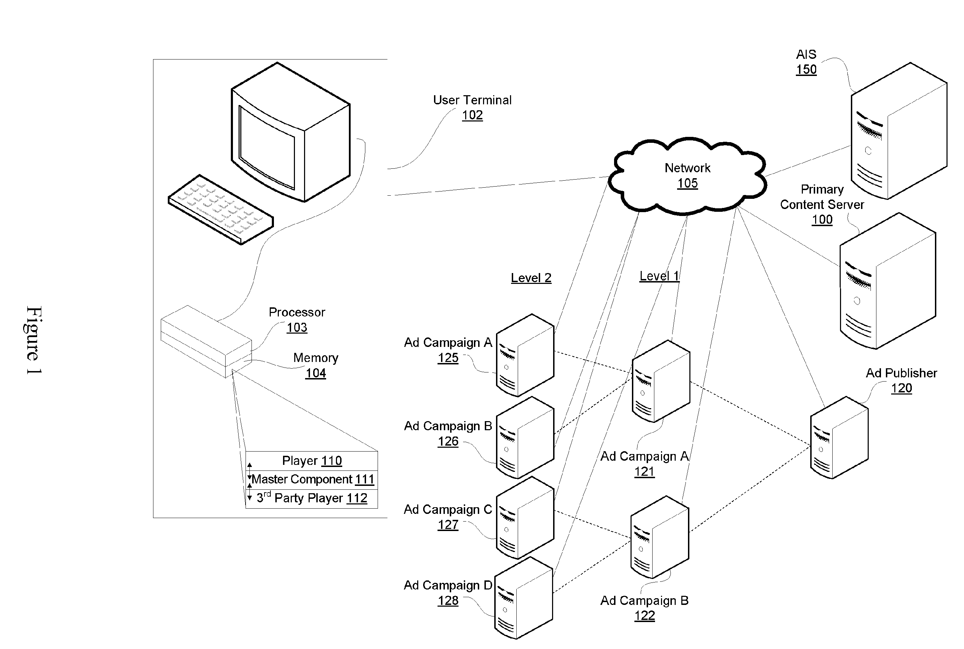

Figure 1 shows a system according to an example embodiment of the present invention. Primary content servers 100 may include downloadable or streamable content, e.g., video content. User terminals 102 may include a processor 103 and a memory 104. The memory 104 may include any conventional permanent and/or temporary memory circuits or combination thereof, a non-exhaustive list of which includes Random Access Memory (RAM), Read Only Memory (ROM), Compact Disks (CD), Digital Versatile Disk (DVD), and magnetic tape. The memory 104 may store content and/or program code to be executed by the processor 103. The processor 103 may be embodied as any conventional processing circuit and device or combination thereof, e.g., a Central Processing Unit (CPU) of a Personal Computer (PC). The user terminal 102 may be embodied, for example, as a PC, desktop, laptop, hand-held device, Personal Digital Assistant (PDA), television set-top Internet appliance, mobile telephone, smart phone, etc., and/or as a combination of one or more thereof.

The processor 103 may execute code for running a browser to access the content of the content servers 100 via a network 105, e.g., the Internet. For example, a user terminal 102 may access a website of a content server 100 which may list the available content of the content server 100. Alternatively, a website of another entity may include a listing of content available at one or more of the content servers 100. Upon accessing a link of the website of the other entity, the other entity may return to the browser a link to the content server 100. According to yet another alternative, the other entity may obtain the content from the content server 100 to provide to the browser.

In an example embodiment of the present invention, an ad insertion system (AIS) 150 may provide a website listing content which may be obtained from the content servers 100. The browser may access a link in the listing of the AIS 150 to select one of the available content listings. In response, the AIS 150 may transmit to the requesting user terminal 102 program rules which may include a playlist of links for portions of the requested content to be obtained from the content server 100. The program rules may also include a link for obtaining ad content. The link(s) for obtaining ad content may be interspersed within the links for obtaining the user-requested content. Alternatively, the AIS 150 may provide an ad insertion file which includes instructions for determining the points during playback of the user-requested content at which to obtain and render ad content. For example, the playlist may include a single link for obtaining the user-requested content and an ad insertion file which indicates that ad content is to be rendered at the beginning, end, and at each 25% increment of playback, of the user-requested content. Accordingly, ad content would be provided five times for the user-requested content. The links and/or ad insertion file may be locally stored in the memory 104 of the user terminal 102 and may be executed by the processor 103.

According to an alternative example embodiment of the present invention, one or more content providers which maintain one or more of the content servers 100 may provide a website(s) listing content which may be obtained from the content servers 100. The browser of a user terminal 102 may access a link in the listing to select one of the available content listings. In response, a content server 100 may transmit to the requesting user terminal 102 a playlist of one or more requested content or one or more links thereto. The content server 100 may additionally provide to the user terminal 102 a link to the AIS 150 to obtain program rules including an ad insertion file according to which to insert ad content during the playing of the user-requested content. Alternatively, a content player 110 stored in the memory 104 and executed by the processor 103 of the user terminal 102 to play the user-requested content may be configured to request an ad insertion file from the AIS 150, e.g., in response to receipt by the player of user-requested content which the player is to render. According to yet another alternative example embodiment of the present invention, the content providers may obtain the program rules and included ad insertion file from the AIS 150 and forward the program rules and ad insertion file together with the user-requested content to the user terminal 102.

The content player 110 executing on the user terminal 102 may output, e.g., display, the user-requested content and obtained ad content. The content player 110 may be native to the browser or may be returned by the AIS 150 with the program rules. For example, the AIS 150 may provide code for determining whether the user terminal 102 includes a copy of a requisite content player and return to the user terminal 102 a copy of the content player 110 conditional upon a determination that the user terminal 102 does not already include a local copy of the content player 110. Further, in an example embodiment of the present invention, an ad publisher 120, discussed below, which may, for example, be referenced by links in the program rules transmitted by the AIS 150, may provide the content player 110 to the user terminal 102 for use together with the program rules.

The program rules may include a master component 111. The master component 111 may be a block of program code to be executed by the processor 103 of the user terminal 102 to execute the ad insertion file and/or accessing of user-requested and/or ad content, e.g., by following obtained links, and to provide the content to the content player 110.

The AIS 150 may provide a link to obtain ad content from an ad publisher 120, i.e., a server of the ad publisher. At the appropriate time, e.g., during playback of the user-requested content and as specified by the program rules received from the AIS 150, the content player 110 may request the master component 111 to obtain an ad for rendering by the content player 110. The master component 111 may accordingly access an ad content link provided by the AIS 150. The ad content link may be to an ad publisher 120 interpreted by the ad publisher 120 as an ad request. The ad publisher 120 may, in response to the ad request, provide ad content to the master component 111. The master component 111, in turn, may provide the ad content to the content player 110 for rendering, e.g., display, of the ad content.

Instead of ad content, the ad publisher 120 may provide to the master component 111 I a further link to a server of yet another entity from which to obtain ad content. For example, administrators of the ad publisher 120 may have entered into an agreement with a number of further entities (the further entities and/or ad servers maintained by the further entities referred to below as ad campaigns) to provide ad content (or still further links) of the other entities in response to requests made to the ad publisher 120 for ad content. Based on business logic, such as that which utilizes data regarding the target demographic of the different ad campaigns, the types of content being displayed at the user terminal 102 which is the source of the ad content request, the agreed upon number of ad impressions to be provided for the different campaigns, etc., the ad publisher 120 may rotate between the entities to provide links to the entities in response to ad content requests. For example, Figure 1 shows level 1 downstream entities, including ad campaign A 121 and ad campaign B 122, links to which the ad publisher 120 may rotate between (as illustrated by the dashed lines extending from the ad publisher 120 in Figure 1) when responding to ad content requests received from one or more user terminals 102.

The AIS 150 may similarly rotate between ad publishers when providing an ad publisher link for the master component 111 to access, although Figure 1 shows only one ad publisher 120 for the sake of clarity. Each of the downstream ad campaigns may similarly rotate between still further downstream ad campaigns. For example, Figure 1 shows that level 1 ad campaign A 121 may rotate between links to level 2 ad campaign A 125 and ad campaign B 126 and that level 1 ad campaign B 122 may rotate between links to level 2 ad campaign C 127 and ad campaign D 128. Of course, any one of the ad publisher 120 or any ad campaign entity may provide ad content instead of a link. Ultimately, one of the entities usually would provide ad content if ad content is ultimately rendered at the user terminal 102. To provide the ad content, a URL to a file location may be provided to allow the master component 111 to obtain the content file at the file location or an entity may serve the content to the master component 111.

In response to the ad content request received from the master component 111, the ad publisher 120 may provide to the master component 111 a link to one of the level 1 ad campaigns 121/122 in a wrapper along with additional data. The wrapper may be, e.g., an extensible Markup Language (XML), Hyper Text Markup Language (HTML), or Javascript, e.g., Java Script Object Notation (JSON), wrapper. However, the wrapper is not limited to these particular types. For purposes of clarity, the wrapper will be referred to below as an XML wrapper. The XML wrapper may include, for example, an ad tag element, which may include a URL to one of the downstream ad campaigns, and a tracking element, which may include one or more tracking URLs to be followed, e.g., during rendering of or interaction with ad content ultimately provided to the content player 110. The master component 111 may follow the tracking URLs to alert the ad publisher 120 of the rendering of or interaction with the ad content. The ad publisher 120, in turn, may update a database maintained by the ad publisher 120 to note the tracked events. The ad publisher 120 may use such information, for example, for determining which ad campaign links to provide in response to further ad content requests.

Instead, of providing ad content or a URL to a downstream entity for obtaining ad content, an entity may provide to the master component 111 a further component, referred to herein as a third party component 112, which, when loaded and executed at the user terminal 102, may obtain ad content from the entity that provided the third party component 112.

Alternatively, the master component 111 may be pre-configured for loading a plurality of third party components 112. For example, the master component 111 may be configured with locations from which to obtain the third party components 112 and/or particular parameters to be used for loading the different third party components 112. According to this embodiment, the XML wrapper may include a trigger for a particular one of the third party components for which the master component 111 is configured. In response, the master component 111 may obtain and load the specified third party component 112.

The third party component 112 may communicate with the master component 111, which may in turn communicate with the content player 110. Some third party components 112 may include an integrated player which may operate in conjunction with the content player 110. The integrated player of the third party component 112 may render the ad content obtained by the third party component 112. After rendering of the ad content, e.g., by the content player 110, the integrated player of the third party component 112, and/or by an integrated player of the master component 111, the master component 111 may return control to the content player 110 to continue rendering of the user-requested content. In any implementation, i.e., whether ad content is rendered by the content player 110 or by an integrated player of the third party component or the master component 111, the content player 110 may be uncontrollable by the third party component 112. Since communication by the content player 110 is with the master component 111, at a subsequent ad insertion point reached while rendering the user-requested content, the content player 110 may direct an ad content request to the master component 111, or otherwise pass control to the master component 111 allowing the master component 111 to request new ad content, without making any request to the third party component 112.

The master component 111 may be configured to load the third party component 112 upon receipt of the third party component 112 from one of the ad content provider entities and to obtain subsequent ad content via another ad content request made to the ad publisher 120, bypassing the third party component 112. In an example embodiment of the present invention, after obtaining ad content from the third party component 112 for providing the ad content to the content player 110, the master component 111 may purge the third party component 112 from the memory 104. According to the embodiment in which an integrated player of the third party component 112 renders the ad content, the master component 111 I may purge the third party component 112 from the memory 104 subsequent to rendering of the ad content by the integrated player of the third party component 112. According to yet another example embodiment of the present invention, storage of the third party component 112 in the memory 104 may be maintained for the possibility of using the third party component 112 to render ad content subsequently obtained, e.g., via a new link from an ad publisher, from the same entity which previously provided the third party component 112, without having to re-obtain the third party component 112.

Regardless of whether the third party component 112 remains stored in the memory 104, the master component 111 may respond to subsequent ad content requests received from the content player 110, or may respond to passage of control from the content player 110 to the master component 111, by transmitting another request to the ad publisher 120 which was accessed for the previous ad or to a different ad publisher, depending on the substance of the program rules received from the AIS 150. Therefore, provision by the ad publisher 120 of a single link for accessing a downstream ad campaign results, at most, in the rendering of only a single ad content of the downstream ad campaign via the link provided by the ad publisher 120. Accordingly, tracking information received from the master component 111 regarding ad content obtained by the master component 111 from the downstream ad campaign accurately reflects the provision by the ad publisher 120 of only a single ad content impression for the downstream ad campaign.

The tracking information provided by the master component 111 to the ad publisher 120 regarding ad content of a downstream ad campaign, access to which was provided via a URL which the ad publisher 120 transmitted to the master component 111, may include, for example, information regarding user interaction with the ad content, e.g., an ad click which results in display of a clickable website or which results in play of a video, or information regarding the playing of the ad content, e.g. the loading of the ad content or the extent to which a video ad has been played. For example, the ad publisher 120 may include in the XML wrapper a video impression tracking URL which the master component 111 may access when a video ad has been loaded and has started to play, an overlay impression tracking URL which the master component 111 may access in response to presentation of an overlay ad, a percentage tracking URL which the master component 111 may access after passage of the specified percentage of a video ad, a time tracking URL which the master component 111 may access at the specified time position within the video ad has been reached, and interval tracking URL which the master component 111 may access at specified regular time intervals, a video click tracking URL which the master component 111 may access upon detection of a user click of a video ad, and/or an overlay click tracking URL which the master component 111 may access upon detection of a user click of an overlay ad.

According to the example embodiment in which the third party component 112 uses an integrated content player for rendering the ad content, since the master component 111 I loads the third party component 112, user input may be initially detected by the master component 111, which may forward notification of the user input to the third party component 112. The third party component, in turn, may interpret the user input as a corresponding user interaction with the ad content rendered by the integrated player of the third party component 112. In response to receipt of the user input, the master component 111 may determine whether a user interaction with the ad content which is specified by one of the tracking URLs provided in the XML wrapper has occurred. If the master component 111 determines that the specified user interaction, e.g., a video or overlay click, has occurred, the master component 111 may access the tracking URL to ping the ad publisher 120, notifying the ad publisher 120 of the occurrence of the specified event.

To determine the loading and playing of content by the integrated player of the third party component 112, the master component 111 may use API hooks into the third party component 112 to monitor the playing of ad content by its integrated player. Based on information obtained by the monitoring of the playing of the a content, the master component 111 may determine whether the playing conditions specified by tracking URLs in the XML wrapper have been satisfied and accordingly access the ad publisher 120 to notify the ad publisher of the extent of the playing of the ad content.

According to the example embodiment of the present invention in which the ad content obtained by the third party component 112 is passed to the master component 111, which, in turn, provides the ad content to the content player 110 for rendering thereof, the determination of user interaction with the ad content may be made by the master component 111 in much the same way as described above with respect to the embodiment in which the integrated player of the third party component 112 is used. The master component 111 may detect the user input which interacts with the rendered ad content. With respect to information regarding the loading and playing of the content, the master component 111 may monitor the content player 110 using conventional methods to determine this information.

According to the example embodiment of the present invention in which the ad content obtained by the third party component 112 is passed to the master component 111, which renders the ad content using an integrated player of the master component 111, the master component 111 may determine satisfaction of criteria for accessing tracking URLs based on user interaction with ad content rendered by its integrated player and/or by monitoring playing of the ad content by its integrated player.

In an example embodiment of the present invention, different ad content types may be handled differently. For example, video ad content may be displayed by an integrated player of the master component 111, while companion banner ads may be passed by the master component 111 to the content player 110 for display by the content player 110.

Several layers of tracking may be applied to rendered ad content. For example, if: the ad publisher 120 provides a link to the level 1 ad campaign A 121, which in turn provides a link to the level 2 ad campaign A 125, which in turn provides ad content to the master component 111; and each of the ad publisher 120, level 1 ad campaign A 121, and level 2 ad campaign A 125 provides its own respective one or more tracking URLs, the master component 111 may accordingly ping each of the three entities respectively when conditions of its respective tracking URL are satisfied.

Since the master component 111, instead of the content player 110, interacts with the third party components 112 of various ad campaigns, a legacy content player 110 may be used in conjunction with new third party components for which the legacy content player 110 is not configured. Instead, only the master component 111 would have to be updated to be compatible with the new third party components.

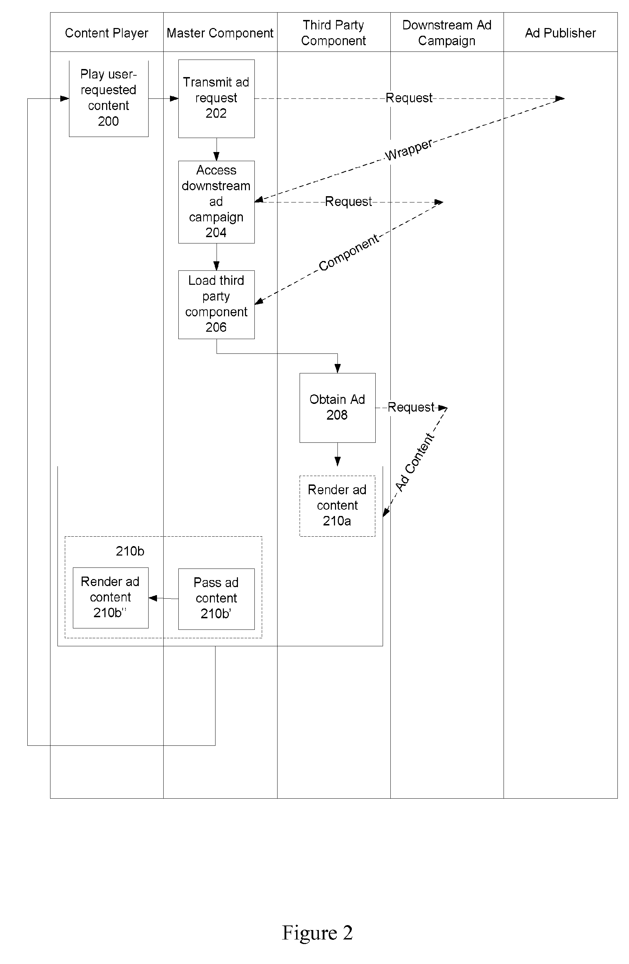

Figure 2 illustrates an example method which may be performed for providing ad content during play of user-requested content. Initially, at step 200, a main content player may play user-requested content. At step 202, upon reaching an ad insertion point, e.g., as defined by a playlist or instructions of an ad insertion file, a master component may transmit a request to an ad publisher. At step 204, upon receipt from the ad publisher of an XML wrapper, the master component may access a downstream ad campaign via a URL included in the XML wrapper. At step 206, the master component may load a third party component referenced by a response from the downstream ad campaign. At step 208, the third party component may obtain an ad from the downstream ad campaign. At step 210, either the third party component may render the ad content via its own integrated player as shown in dashed block 210a or the main content player may render the ad content after having it passed to the main content player by the master component as shown in dashed block 210b, which includes steps 210b' and 210b". The method may then loop back to step 200 and repeat the steps until the end of playback of the user-requested content is reached.

In an example embodiment of the present invention, in response to a request for ad content, an entity, e.g., the ad publisher 120 or one of the downstream ad campaigns, may provide an XML wrapper that includes a primary URL and one or more failover URLs. Similarly, the program rules provided by the AIS 150 may include a primary URL and one or more failover URLs. If, in response to accessing a server via the primary link, the user terminal 102 receives data which the processor 103 does not recognize as a valid ad content or does not receive response data at all, the user terminal 102 may access a first failover URL to obtain ad content from a secondary source. It is noted that this example embodiment may implemented in conjunction with or independent of the exemplary embodiments discussed above for rotating between and tracking ad content of third party components provided by ad content source entities.

For example, in an example embodiment in which the failover URL mechanism is used in conjunction with the master component 111, the master component 111 may receive an XML wrapper from the ad publisher 120 which includes a primary URL linking to the ad campaign A 121 and a failover URL linking to the ad campaign B 122. Upon receipt of the XML wrapper, the master component 111 may transmit to the ad campaign A 121 an ad content request via the primary URL. If the master component 111 does not receive a response from the ad campaign A 121 within a predetermined timeout period (which may be set by the program rules obtained from the AIS 150 for application to all URL accesses for obtaining ad content or which may be set by the individual XML wrapper) or if the master component 111 receives an invalid response from the ad campaign A 121, the master component 111 may transmit to the ad campaign B 122 an ad content request via the failover URL. That which is considered to be an invalid response may be explicitly defined in the XML wrapper. Alternatively, any data received by the master component 111 which the master component 111 is not configured to recognize as valid may be considered by the master component 111 as invalid. For example, the master component may be configured to recognize as valid only renderable content files (or XML wrappers including renderable content files) or XML wrappers which include URLs for obtaining renderable content files.

Use of failover URLs may be made with respect to XML wrappers received from any hierarchical level of ad content provider entities. For example, the master component 111 may access ad campaign A 121 via a primary URL included in an XML wrapper provided by the ad publisher 120. The ad campaign A 121 may responsively provide an XML wrapper which includes a primary URL linking to the level 2 ad campaign A 125 and a failover URL linking to the level 2 ad campaign B 126. The master component 111 may responsively link to ad campaign A 125, and if a valid response is not received, the master component may link to ad campaign B 126.

After reaching and exhausting failover URLs at the lowest hierarchical level of chained ad content provider entities, the master component 111 may incrementally work its way up the hierarchy, attempting failover URLs of the next higher hierarchical level, and proceeding further up after exhaustion of the failovers at each higher level.

For example, with respect to Figure 1, which shows only three hierarchical levels of ad content provider entities, and continuing with the preceding example of linking to the ad campaign B 126 using the failover URL provided by the ad campaign A 121, if the ad campaign B 126 does not return a valid ad content response, the primary URL provided by the ad publisher 120 may be considered by the master component 111 to have failed, since a valid ad content file was not ultimately obtained via the primary URL to ad campaign A 121 1 (since all links provided by ad campaign A 121 have failed). The master component 111 may therefore access the failover URL linking to the ad campaign B 122, which may in turn provide an XML wrapper including a primary URL linking to ad campaign C 127 and a failover URL linking to ad campaign D 128, which may be utilized by the master component 111 much the same way as described above with respect to the URLs provided by the ad campaign A 121. If a valid response is not received via use of the failover URL linking to the ad campaign B 122, the URL linking to the ad publisher 120 may be considered to have failed (assuming the ad publisher 120 has not provided any further failover URLs). If the program rules provided by the AIS 150 do not include a failover URL, then the master component 111 may return control to the content player 110 for continuing play of the user-requested content without having rendered any ad content. If the program rules include one or more failover URLs, the master component may utilize the failover links and may provide for continuation of the user-requested content subsequent to the earlier of play of received valid ad content and exhaustion of all failover URLs without receiving valid ad content.

Complete failure may be determined at any hierarchical level. For example, if the program rules include only a URL to the ad publisher 120 and do not include any failover URL, and the ad publisher 120, in response to initial access thereof, does not provide a valid ad content file or XML wrapper, the master component 111 may determine that an error has occurred and may return control to the content play 110 to continue play of the user-requested content.

In an alternative example embodiment, in response to a complete failure to obtain ad content, play of the user-requested content may be discontinued. For example, an error may be displayed instead of continuation of play of the user-requested content. In yet another alternative example embodiment of the present invention, an error may be displayed and play of the user-requested content may continue thereafter.

Inclusion of a laundry list of primary and failover URLs in either the program rules or an XML wrapper may be inefficient, since it may require the master component 111 to download more data than necessary. For example, if use of a primary or first failover URL is successful in providing valid renderable ad content, transmission to the master component 111 of the subsequently listed failover URLs would have been unnecessary. Furthermore, business logic determinations regarding which ad content linking URLs to provide rapidly change, so that by the time the master component 111 selects a failover URL, the source of the failover URL would have provided a different URL instead of the failover over being utilized, had the source received an ad content request at that time.

Therefore, for example, to increase efficiency and/or facilitate real time provision of ad content source links, according to an alternative example embodiment of the present invention, the AIS 150 or other ad content provider entity may provide to the user terminal 102 a single primary ad content URL and a single failover ad content URL. The primary URL may be a link to a downstream ad content source, e.g., the ad publisher 120 where the AIS 150 provides the URL or one of the ad campaigns where the ad publisher 120 provides the URL. The single failover URL may be a link back to the provider of the primary and failover URLs.

For example, the ad publisher 120 may transmit to the user terminal 102 an XML wrapper which includes a primary URL linking to the level 1 ad campaign A 121 and a failover URL linking back to the ad publisher 120. Should the primary URL fail, e.g., where a valid ad content response is not received from the ad content source to which the primary URL links, the user terminal 102 may link back to the ad publisher 120 via the failover link previously provided by the ad publisher 120 to the user terminal 102. The ad publisher 120 may responsively determine a new primary URL to transmit to the user terminal 102. The new primary URL is essentially a real time determined failover from the previously provided primary URL. The ad publisher 120 may transmit to the user terminal 102 a new XML wrapper including the newly determined primary URL and yet another failover URL which links back to the ad publisher 120.

The determination, in response to linking via a failover URL, of a new primary URL may be based on conventional business logic rules, which may be unique to any ad content provider entity. It may occur that the ad content provider entity determines to provide the same primary URL in response to failure of which the content provider entity was again accessed. For example, if the ad campaign A 121 provides a certain predetermined number of ad impressions within a predetermined time interval, then, in response to an initial request by the user terminal 102 to the ad campaign A 121, the ad campaign A 121 may refrain from providing a valid response if the ad campaign A 121 has already provided the predetermined number of ad impressions within the time interval in which the request was received. The ad publisher 120, in response to receiving a request from the user terminal 102 via the failover link may determine that, although a valid response was not previously received by the user terminal 102 from the ad campaign A 121, a new time interval may have or probably has begun, so that the ad campaign A 121 is likely to provide a valid response to a new request from the user terminal 102. Based on such a determination, the ad publisher 120 may transmit to the user terminal 102 a new XML wrapper including another primary URL linking to the ad campaign A 121 and a failover URL linking back to the ad publisher 120.

The use of the recursive failover mechanism, i.e., where a failover URL links back to the provider of the failover URL and the primary URL from which the failover resulting in use of the failover URL occurred, may be at any hierarchical level of the ad content provider entities. For example, in response to using one of the URLs provided by the ad publisher 120, e.g., the initial primary URL provided by the ad publisher 120, the user terminal 102 may access one of the downstream ad content provider entities, e.g., the ad campaign A 121. The downstream ad content provider entity, e.g., the ad campaign A 121, itself may further provide to the user terminal 102 an XML wrapper including a primary URL, e.g., linking to the level 2 ad campaign A 125, and a failover URL linking back to the level 1 ad campaign A 121. The link to the level 1 ad campaign A 121 provided as the primary URL of the ad publisher 120 may be considered to have failed (where the failure is defined as the non-receipt of a valid ad content response) conditional upon exhaustion of all failover URLs provided by the level 1 ad campaign A 121. Where the level 1 ad campaign A 121 uses the recursive failover mechanism, the exhaustion may be considered to have occurred once the level 1 ad campaign A 121 ceases to provide a new primary URL in response to a failover from one of its provided primary URLs. Similarly, a primary URL provided by the level 1 ad campaign A 121 directly linking to a further downstream ad content provider entity (or other source, such as a file server) may be considered to have failed conditional upon exhaustion of all failovers (if any) of the further downstream ad content provider entity.

According to an example embodiment of the present invention, an entity may respond to a failover request, made by linking to the entity via a failover URL the entity previously provided, by taking into consideration the previous failure which occurred when the user terminal 102 used the previously provided primary URL. To do so, an entity may append targeting information to a failover URL. While the user terminal 102 may treat the entire URL as an address, the accessed entity may correctly interpret the appended portion of the URL as targeting information rather than address parameters. The targeting information may indicate that the URL via which the entity is being accessed was previously provided as a failover URL and may further indicate the primary URL, failure of which resulted in use of the failover URL. The entity may accordingly incorporate this information into its determination of a new primary URL. For example, based on targeting information appended to a failover URL provided by the ad publisher 120, the ad publisher 120 may determine that a primary URL linking to the ad campaign A 121 failed and may therefore determine that the primary URL the ad publisher 120 next provides to the user terminal 102 should not be to the ad campaign A 121.

In addition or as an alternative to appending targeting information by an entity to a failover URL provided by the entity, the user terminal 102 may transmit targeting information regarding the failover when accessing the entity via the failover URL using conventional methods of providing targeting information.

The recursive failover mechanism and the definition of a set of a plurality of failover URLs to downstream ad content provider entities may be used in conjunction. For example, an entity may provide a primary URL, one or more failover URLs to downstream entities, and finally a failover URL that links back to itself. The use of such a combination may be advantageous to balance the objective of increased efficiency of a load on the server side and of response time efficiency. For example, repeated failover requests to the ad content provider entity may place an undue load on the entity to repeatedly handle such requests, whereas inclusion of a high number of predetermined failover URLs may unduly increase response time. Further, different entities may use different failover mechanisms. For example, the ad publisher 120 may use the recursive failover mechanism, while a downstream entity to which a URL provided by the ad publisher 120 ultimately links may instead provide a predetermined set of failover URLs (or no failover URL), without taking advantage of the recursive failover mechanism.

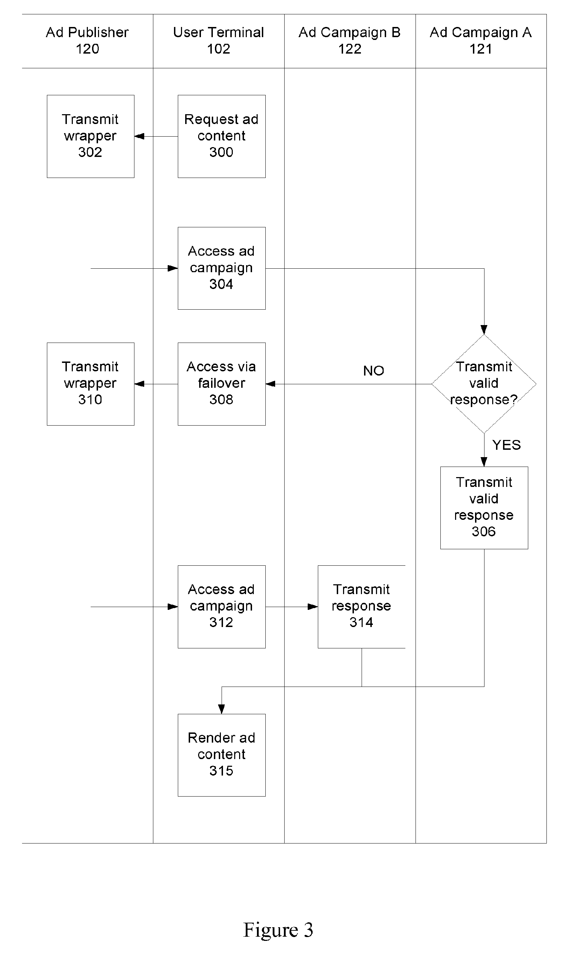

Figure 3 is a flowchart illustrating an example method of obtaining ad content using the recursive failover mechanism according to the present invention. At step 300, the user terminal 102, e.g., in accordance with program rules received from the AIS 150, may, e.g., via a URL obtained from the AIS 150, transmit to the ad publisher 120 a request for ad content. At step 302, the ad publisher 120 may responsively transmit to the user terminal 102 an XML wrapper which includes a primary URL and a failover URL. Responsive to receipt of the XML wrapper, the user terminal 102 may, at step 304, access ad campaign A 121 via the primary URL.

At step 306, the ad campaign A 121 may transmit a valid response to the user terminal 102 before a predetermined response time period times out. If a valid ad content is included in the response, the method may proceed to step 315 at which the user terminal 102 may render, e.g., display the ad content. If an invalid response is received by the user terminal 102 from the ad campaign A 121 or if the timeout condition occurred without receipt of a valid response from the ad campaign A 121, the user terminal may, at step 308, access the ad publisher 120 via the failover URL.

At step 310, the ad publisher 120 may responsively transmit to the user terminal 102 another XML response including another primary URL and another failover URL. At step 312, the user terminal may responsively access the ad campaign B 122 via the new primary URL. At step 314, the ad campaign B 122 may transmit ad content to the user terminal 102. At step 315, the user terminal 102 may responsively render, e.g., display, the received ad content.

The ad campaigns A 121 and B 122 may themselves also provide an XML response including primary and failover URLs, and the failover URL to the campaign B 122 may also fail, e.g., by receipt of invalid data or a timeout. However, Figure 3 does not show these features for purposes of clarity.

In an example embodiment of the present invention, a calling frequency may be set for URLs of the program rules or of an XML wrapper. For example, the ad publisher 120 may set a calling frequency of 2 for a primary URL included by the ad publisher 120 in an XML wrapper transmitted to the user terminal 102. If a calling frequency set for a URL is greater than 1, then, upon failure of the URL, the user terminal 102 may retry the URL until expiry of an overall timeout period, receipt of valid and renderable ad content, or until the occurrence a number of times equal to the set calling frequency of the earlier of expiry of a timeout period per access try or non-receipt of a valid response after accessing a downstream entity referenced by the URL. A calling frequency may be set, for example, if the entity which provides the URL expects that retries may result in receipt of a valid response even after failure of a previous attempt.

For example, if the downstream entity provides a certain predetermined number of ad impressions within a predetermined time interval, then, in response to an initial request by the user terminal 102 to the downstream entity, the downstream entity may refrain from providing a valid response if the downstream entity has already provided the predetermined number of ad impressions within the time interval in which the request was received. However, in response to a second attempt of access via the URL linking to the downstream entity, the downstream entity may provide a valid response if a new time interval has begun. Therefore, if, for example, the time interval is short, e.g., so that it is expected to expire within the amount of time expected for a reasonable number of attempts, the calling frequency may be set to the reasonable number. A URL may be considered to have failed once a timeout period per URL expires or a valid response is not received even after the attempting access of the downstream entity for the number of times set by the calling frequency. With respect to the individual URL accesses, an access may be considered to have failed if a valid response is not received before expiry of a URL access timeout or if an invalid response is received. Once the URL is considered to have failed, e.g., after attempting access for the number of times specified by the frequency number, a failover URL, if any, may be used. Timers may be specified by the program rules obtained from the AIS 150 an/or in XML wrappers.

According to an example variation of this embodiment, a URL may be retried up to the number of times specified by the frequency number associated with the URL conditional upon that a failover URL is not provided, since if the failover URL is provided, the failover may be used instead of re-accessing the primary URL.

According to an example variation of this embodiment, each retry of a URL after a failure thereof may be attempted after first attempting to obtain valid ad content using a failover URL. Where more than one failover URL is provided or where a recursive failover mechanism is used, where the failover URL links back to the original source of the links, an example embodiment may provide that only one access to an ad content providing entity via a failover link (e.g., a new primary obtained from the source) be attempted prior to retrying the initial primary URL. It will be appreciated that a number of nuanced variations of this embodiment may be implemented, e.g., where failover URLs themselves are associated with respective frequency numbers.

For example, according to an example embodiment, the ad publisher 120 may provide to the user terminal 102 an XML wrapper including a primary URL having set therefor a calling frequency of 2 and a fixed failover URL that does not have its own frequency number. The user terminal 102 may attempt to access the entity referenced by the primary URL. If a valid response is not received, e.g., within a specified response period, the user terminal may use the failover URL. If the user terminal 102 receives a valid renderable ad content via the failover URL, either directly from the entity referenced by the failover URL or a further downstream entity, the user terminal may render the ad content without retrying the primary URL provided by the ad publisher 120. If the failover URL fails, then the user terminal 102 may retry the initial primary URL provided by the ad publisher 120.

In an example embodiment of the present invention, an entity may include an EnableFailover flag element in an XML wrapper the entity transmits to the user terminal 102. The flag may be a Boolean flag, where a first value indicates that use of failover URLs is enabled and a second value indicates that use of failover URLs is disabled. For example, the setting of the flag by a particular entity to disable the failover mechanism may cause the user terminal 102 to disregard any failover URLs provided by any other entity downstream of the particular entity which is accessed via the URL(s) of the particular entity. The flag may therefore provide an entity with additional control over the handling of responses from downstream entities. This may be particularly beneficial since an entity is often unaware of its indirect downstream entities and the number of failovers said downstream entities may provide. If the failover mechanism is disabled for the entities downstream of the particular entity, the likelihood of returning to the URLs of the particular entity (assuming valid ad content was not obtained from any of the downstream entities) within a reasonable amount of time is raised.

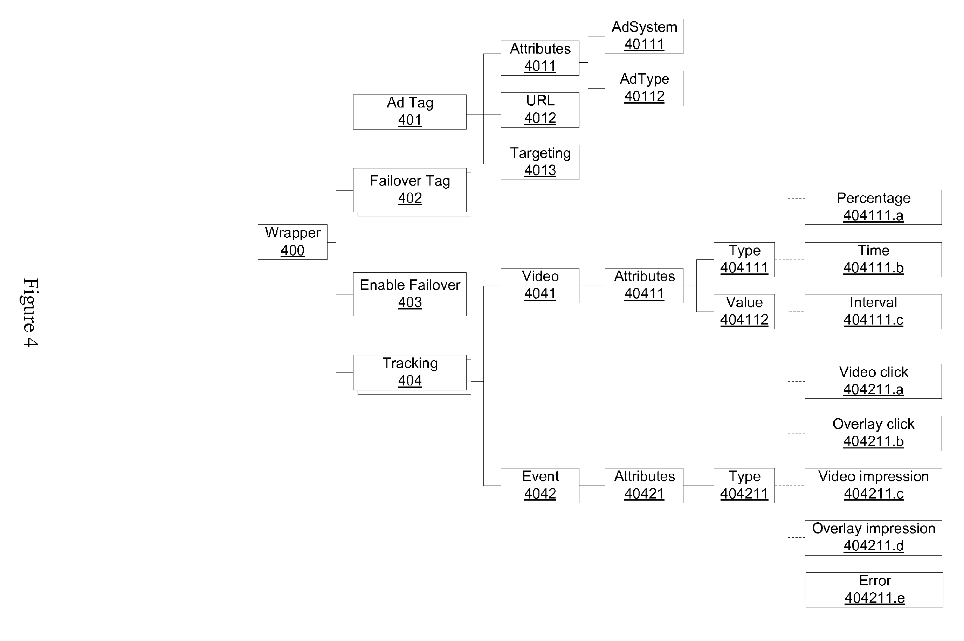

Figure 4 illustrates an exemplary schema of a wrapper 400, e.g., an XML wrapper, returned by an entity to the user terminal 102. The wrapper 400 may include an ad tag element 401, one or more failover tag elements 402, an EnableFailover flag element 403, and/or one or more tracking elements 404. One or more of these elements may be optional. For example, the ad tag element 401 alone may be sufficient.

Attributes 4011 of the ad tag element 401 may include an AdSystem attribute 40111 and an AdType attribute 40112. The AdType attribute 40112 may be excluded. The AdSystem attribute 40111 may specify the name of the ad content provider entity to which the ad tag element 401 links. The user terminal 102, e.g., the master component 111 executing on the user terminal 102, may then be able to determine cache busting and parameter passing methods to be used for the specified content provider entity. The AdType attribute 40112 may specify the type of ad content the downstream entity to which the ad tag element 401 links is to provide in response to access by the user terminal 102 using the ad tag element 401. For example, an entity may be configured to provide a video, text, or overlay, one of which is specified by the AdType attribute 40112. If an AdType attribute 40112 is not specified, the attribute may be set to a default or may be left undefined.

The user terminal 102 may forward the AdType data to the downstream entity the user terminal 102 accesses via the link provided in the XML wrapper, so that the downstream entity provides the specified ad type. Further, the user terminal 102 may use the information of the AdType data to determine how to parse ad content it receives from the downstream entity. Alternatively or additionally, an entity which ultimately provides the ad content to be rendered may include information indicating the type provided for the user terminal 102 to be able to determine how to parse the data.

The ad tag element 401 may include sub-elements. The sub-elements may include a URL 4012 to a downstream ad content provider entity or ad content source, e.g., a file server, and one or more targeting elements 4013. However, targeting may be omitted. Further, even the URL 4012 may be omitted. For example, the user terminal 102 may be configured to use a default URL for certain downstream entities specified by the AdSystem attribute 40111. For example, for a particular specified entity, the user terminal 102 may be configured to use a default URL which links to a location of a third party component 112 of the specified entity. The third party component 112, once downloaded to the user terminal 102, may handle retrieving ad content from the specified entity.

The targeting element 4013 may include one or more targeting sub-elements conventionally used to narrow the field from which an entity accessed via the URL 4012 is to provide ad content. For example, conventional targeting information, such as GOOGLE targeting, may be included. The user terminal 102 may forward the targeting information to the downstream entity.

Additionally, the user terminal 102 may add additional targeting information to pass to the downstream entity. For example, targeting information added by the user terminal 102 may include information regarding the user-requested content being rendered by the content player 110 and for which ad content is requested.

In an example embodiment of the present invention, the targeting information may be dynamically generated to indicate information regarding the content played by the player 110 and for which an advertisement is to be provided. The URL 4012 linking to the ad content provider entity may include a field which dynamically accepts a parameter. For example, the field may be <key=[keyword]> into which the master component may insert information, such as one or more keywords associated with the content, e.g., video, played by the player 110. In an example embodiment, the master component obtains the keyword data from the player 110, updates the URL 4012 to include the keyword data, and transmits the dynamically updated URL 4012 to the ad content provider entity. The player 110 may obtain the information regarding the content from, e.g., an HTML page in which the content is played or from other metadata associated with associated with the played content.

Alternatively or additionally, the master component may update the URL 4012 with dynamic information obtained via other methods. For example, the master component may use hooks into the player 110 for tracking user interaction with the content played by the player 110, which may be used by the ad content provider entity for targeting advertisement information or type. Such tracking information may include the amount of the content that has been viewed, e.g., a position in video playback or cue point, or the number of times the content has been viewed. Other information can also or alternatively be provided. For example, the provided information may include a number of advertisement requests that have already been made during the current playback for the current content, a number of advertisement requests that have already been made for the current user for the current content, or the number of advertisement requests that have already been made for the current user for any content within a certain period of time or in a present session. In an example embodiment of the present invention, predetermined characters or symbols may be used to distinguish between the types of targeting information included in the URL. For example, while <key=[keyword]> may be used for providing a keyword, <cue=[playback_position]> may be used for providing a cue point. The ad content provider entity, in turn, can tailor the advertisement to be returned based on the targeting information included in the URL.

The failover tag element 402 may have essentially the same structure as that of the ad tag element 401. Its sub-elements and attributes are therefore not illustrated in Figure 4 for clarity.

The EnableFailover flag element 403 may be assigned a Boolean value, e.g., a 1 or a 0.

Each tracking element 401 may include either a video sub-element 4041 or an event sub-element 4042, each of which may be a URL to be pinged. Attributes 40411 of the video sub-element 4041 may include a type attribute 404111 and a value attribute 404112. The type attribute 404111 may be, for example, any one of three types including a percentage type 404111.a, a time type 404111.b, or an interval type 404111.c. These three types, which are not meant to be an exhaustive list of types, are not sub-elements or attributes of the type attribute 404111, but rather are three variations of the type attribute 404111. The percentage type attribute 404111.a may indicate that the tracking URL is to be pinged at a particular percentage within play of the video, the percentage being specified by the value attribute 404112. The time type attribute 404111.b may indicate that the tracking URL is to be pinged at a particular time position within the video, the time being specified by the value attribute 404112. The interval type attribute 404111.c may indicate that the tracking URL is to be pinged at regular time intervals during play of the video, the interval length being specified by the value attribute 404112.

An attribute 40421 of an event sub-element 4042 may include a type attribute 404211. The type attribute 404211 may be, for example, any one of five types including a video click type 404211.a, an overlay click type 404211.b, a video impression type 404211.c, an overlay impression type 404211.d, or an error type 404211.e. These five types, which are not meant to be an exhaustive list of types, are not sub-elements or attributes of the type attribute 404211, but rather are five variations of the type attribute 404211. The video click type attribute 404211.a may indicate that the tracking URL is to be pinged when a user clicks on the displayed video. The overlay click type attribute 404211.b may indicate that the tracking URL is to be pinged when the user clicks on the displayed overlay ad. The video impression type attribute 404211.c may indicate that the tracking URL is to be pinged when the video begins to play. The overlay impression type attribute 404211.d may indicate that the tracking URL is to be pinged when the overlay ad is displayed. The error type attribute 404211.e may indicate that the tracking URL is to be pinged when an error occurs, such as when no valid ad content can be obtained or when obtained ad content cannot be rendered.

An example embodiment of the present invention is directed to a processor, which may be implemented using any conventional processing circuit, to execute code provided, e.g., on a hardware-implemented computer-readable medium, to provide program rules, an ad insertion file, and/or a master component to a user terminal, which master component and program rules have any one of the features, alone or in combination, described above, for example, with respect to the master component 111. For example, these elements may be provided to the user terminal in response to requests therefor made by the user terminal or by another content provider, as described above in detail.

An example embodiment of the present invention is directed to a processor, which may be implemented using any conventional processing circuit, to execute code provided, e.g., on a hardware-implemented computer-readable medium, to generate and provide, for example to a requesting user terminal, a wrapper, such as one of the wrappers discussed above, having any one of the features, alone or in combination, of the XML wrapper described in detail above.

Those skilled in the art can appreciate from the foregoing description that the present invention may be implemented in a variety of forms, and that the various embodiments may be implemented alone or in combination. Therefore, while the embodiments of the present invention have been described in connection with particular examples thereof, the true scope of the embodiments and/or methods of the present invention should not be so limited since other modifications will become apparent to the skilled practitioner upon a study of the drawings, specification, and following claims.

## Claims

1. A computer-implemented content rendering method, comprising:
(a) responsive to a request for media content from a terminal, providing to the terminal the media content, a program module, and ad insertion instructions, the ad insertion instructions including at least one link to a respective ad content providing entity;
(b) rendering the media content via a media content player running on the terminal; and
(c) for each of a plurality of ad insertion points during the rendering of the media content, the terminal executing the program module to:
(I) access a link of the at least one link;
(II) responsive to receipt of data that is returned in response to the link access, determine which of (i) reference data referencing a content fetching program and (ii) ad content the data includes;
(III) in an instance in which the determination is that the data includes the reference data referencing a content fetching program:
(A) load the content fetching program, the content fetching program subsequently obtaining ad content for rendering at the terminal; and
(B) return control to the media content player, wherein the terminal executes the program module to repeat step (c) subsequent to the return of control to the media content player until completion of one of the rendering of the media content and the ad insertion points; and
(IV) in an instance in which the determination is that the data includes ad content, provide the ad content for rendering at the terminal.

2. The computer-implemented content rendering method of claim 1, wherein:
the program module is configured via location data to obtain and load a plurality of content fetching programs; and
which of the content fetching programs is obtained depends on the reference data received by the terminal.

3. The computer-implemented content rendering method of claim 1, wherein the reference data includes the content fetching program.

4. The computer-implemented content rendering method of claim 1, wherein the ad insertion points are defined by interspersion of the at least one link within a playlist of the media content.

5. The computer-implemented content rendering method of claim 1, wherein the content fetching program loaded in step (c)(III) includes a component content player which renders the ad content obtained by the content fetching program.

6. The computer-implemented content rendering method of claim 1, wherein the program module causes the terminal to pass the ad content obtained by the content fetching program to the media content player, the media content player rendering the passed ad content.

7. The computer-implemented content rendering method of claim 1, wherein the data that is returned in response to the link access includes tracking instructions in accordance with which the program module causes the terminal to transmit tracking data to at least one ad content providing entity, the tracking data including information identifying ad content rendering events.

8. The computer-implemented content rendering method of claim 7, wherein the ad content rendering events include at least one of a video impression event, an overlay impression event, an event of rendering of a specified percentage of the ad content, an event of reaching a specified time position within the rendering of the ad content, an event of passage of a specified time interval during the rendering of the ad content, and an event of interaction with the rendered ad content via a user input.

9. The computer-implemented content rendering method of claim 8, wherein the terminal transmits tracking data during one of the repeated performances of step (c).

10. The computer-implemented content rendering method of claim 8, wherein the content fetching program loaded in step (c)(III) includes a component content player which renders the ad content obtained by the content fetching program and the program module forwards data representing the user input to the loaded content fetching program.

11. The computer-implemented content rendering method of claim 8, wherein the content fetching program loaded in step (c)(III) includes a component content player which renders the ad content obtained by the content fetching program and the program module monitors the rendering of the ad content by the component content player via Application Program Interface (API) hooks into the component content player.

12. The computer-implemented content rendering method of claim 7, wherein:
in response to the access of the link in step (c)(I), the ad content providing entity to which the accessed link refers provides a link to another ad content providing entity; and
the tracking instructions cause the terminal to transmit tracking data to the ad content providing entity to which the link accessed in step (c)(I) refers and to the other ad content providing entity.

13. The computer-implemented content rendering method of claim 12, wherein the tracking data transmitted to the ad content providing entity to which the link accessed in step (c)(I) refers differs from the tracking data transmitted to the other ad content providing entity.

14. A computer-implemented content rendering method, comprising:
responsive to a request for media content from a terminal, providing to the terminal the media content, a program module, and ad insertion instructions, the ad insertion instructions including at least one link to a respective ad content providing entity;
rendering the media content via a media content player running on the terminal; and
for each of a plurality of ad insertion points during the rendering of the media content, the terminal executing the program module to:
access a link of the at least one link; and
responsive to receipt of response data that is returned in response to the link access, load a content fetching program referenced by the response data, the loaded content fetching program subsequently obtaining ad content for rendering at the terminal.

15. A content providing system, comprising:
a terminal including a processor configured to render user-requested content and ad content;
an ad insertion system configured to provide program code and data to the terminal for execution of the program code by the processor to render the user-requested content and the ad content in accordance with the data; and
a plurality of ad content providing entities;
wherein:
the data includes information regarding a plurality of content fetching programs;
during the execution of the program code, the terminal, at each of first and second ad insertion points indicated by the data provided by the ad insertion system, accesses a respective link included in the data to a respective one of a first ad content providing entity and a second ad content providing entity, responsive to which the respective ones of the first and second content providing entities provides to the terminal respective ones of first reference data referencing one of the plurality of content fetching programs and second reference data referencing another of the plurality of the content fetching programs; and
responsive to receipt of each of the first reference data and the second reference data, the terminal:
loads the respectively referenced content fetching program according to the information regarding the respectively referenced content fetching program included in the data provided by the ad insertion system;
executes the respectively loaded content fetching program, which causes the terminal to transmit an ad content request to a respective ad content location preselected by the respective loaded content fetching program and associated, respectively, with the first and second ad content providing entities; and
renders respective ad content obtained from the respective preselected ad content location.
